# EUROPEAN PATENT APPLICATION

(11) **EP 4 691 818 A1**
(43) Date of publication of application: **11.02.2026**
(21) Application number: 24810326.9
(22) Date of filing: 17.05.2024
(51) Int. Cl.: B60J 10/23

(54) **SEALING STRUCTURE, VEHICLE WINDOW AND VEHICLE**

(30) Priority: 19.05.2023 CN 202310570462
(71) Applicant: Fuyao Glass Industry Group Co., Ltd., Fuqing, Fujian 350300 (CN)
(72) Inventor: HONG, Jinquan, Fuqing, Fujian 350300 (CN); LI, Weijun, Fuqing, Fujian 350300 (CN); ZHANG, Jianming, Fuqing, Fujian 350300 (CN)
(74) Representative: Patentanwälte Olbricht Buchhold Keulertz
(86) International application number: PCT/CN2024/093921
(87) International publication number: WO 2024/240083

(57) **Abstract**

A sealing structure configured to seal a junction between a first component (1) and a second component (2), in which the sealing structure includes: a first sealing member (3), which is configured to be in sealed connection with the first component (1) and provided with a first sealing lip (301); and a second sealing member (4), which is configured to be in sealed connection with the second component (2) and provided with a second sealing lip (401); at least a portion of the first sealing lip (301) is in sealed connection with at least a portion of the second sealing lip (401). The present disclosure solves the technical problem that the replacement of either of two adjacent glasses leads to the failure of a sealing structure therebetween. Further, a vehicle window provided with the sealing structure and a vehicle provided with the vehicle window are disclosed.

## Description

### RELATED APPLICATION

The present disclosure claims the priority to Chinese Patent Application filed on May 19, 2023 with an application number of 202310570462.6, the disclosure of which is incorporated herein by reference.

### TECHNICAL FIELD

The present disclosure relates to the field of vehicles, particularly to a sealing structure, a vehicle window, and a vehicle, and more particularly to a sealing structure with a lip for easy assembly, a vehicle window and a vehicle provided with the sealing structure.

### BACKGROUND

At present, vehicles equipped with panoramic glass roofs are becoming increasingly common. The advantages of the panoramic sunroof are as follows: first, the panoramic sunroof has an attractive appearance (the panoramic sunroof can form an integrated glass structure with a windshield and a rear window of a vehicle); second, compared with a multi-panel sunroof glass, the panoramic sunroof not only achieves simpler and more convenient production and assembly processes, but also offers certain cost advantages.

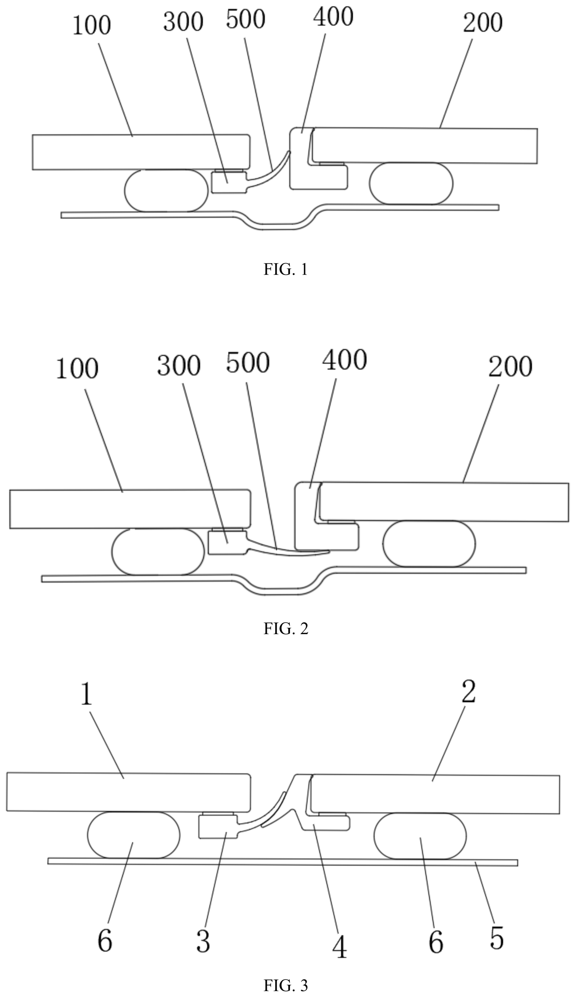

Generally, decorative strips (or encapsulation structures) are disposed around the panoramic roof glass of a vehicle to match surrounding components, serving the purposes of visual shielding and wind noise reduction. In particular, when the panoramic sunroof is matched with the windshield, a front fixed sunroof or the rear window of the vehicle, as illustrated in FIG. 1, it is necessary to mount a sealing structure between two adjacent glasses (i.e., the windshield 100 and the sunroof glass 200 in FIG. 1). Specifically, as illustrated in FIG. 1, a first sealing strip 300 may be disposed on the windshield 100, and a second sealing strip 400 may be disposed on the sunroof glass 200. When the windshield 100 and the sunroof glass 200 are in an assembled state, a sealing lip 500 on the first sealing strip 300 abuts against the second sealing strip 400, thereby achieving a seal at the junction between the windshield 100 and the sunroof glass 200.

However, in conventional vehicles equipped with the panoramic roof glass, the fixed panoramic roof glass is generally installed first, followed by the windshield and the rear window. It is precisely this installation sequence that causes, when the panoramic roof glass needs to be replaced, an adverse effect on the overlapping state of the originally adjacent glasses (such as the windshield and the rear window), so that the sunroof glass cannot match the original adjacent glasses during subsequent assembly, and it is difficult to mount the sunroof glass. Specifically, as illustrated in FIG. 2, after the sunroof glass 200 is disassembled, a sealing lip 500 of the first sealing strip 300 on the windshield 100 sags due to the lack of a supporting position. When the sunroof glass 200 is remounted, the sealing lip 500 of the first sealing strip 300 on the windshield 100 can hardly return to the original position and sealing state, thereby causing the sealing function of the first sealing strip 300 to fail or nearly fail. To restore the original function, it is even necessary to disassemble the front and rear windows together with the sunroof glass 200, then remount the sunroof glass 200 followed by the windshield and rear window in accordance with an vehicle assembly sequence. This process is not only cumbersome and inefficient but also significantly increases the replacement cost, thus lacking economy and applicability.

Of course, the above situation is just an example. For similar structural configurations and vehicle assembly sequences, the aforementioned problem also arises when any one of the glasses needs to be replaced.

Regarding the problem in the related art where the replacement of either of two adjacent glasses leads to the failure of a sealing structure therebetween, no effective solution has been proposed at present.

### Summary

An objective of the present disclosure is to provide a sealing structure, a vehicle window, and a vehicle, when either of two adjacent glasses is replaced, it will not affect the other glass or the sealing structure therebetween. Before and after replacement, not only the good sealing performance of the sealing structure is ensured, but also the disassembly, assembly and replacement of the glass are facilitated, thus achieving good economy and applicability.

The objective of the present disclosure is achieved by the following technical solutions.

The present disclosure provides a sealing structure for sealing a joint between a first component and a second component, in which the sealing structure includes:
a first sealing member, which is configured to be in sealed connection with the first component and provided with a first sealing lip; and
a second sealing member, which is configured to be in sealed connection with the second component and provided with a second sealing lip;
at least a portion of the first sealing lip is in sealed connection with at least a portion of the second sealing lip.

In an optional embodiment of the present disclosure, when both the first component and the second component are assembled at preset positions, at least a portion of a bottom surface of the first sealing lip is in sealed connection with at least a portion of a top surface of the second sealing lip, or at least a portion of a top surface of the first sealing lip is in sealed connection with at least a portion of a bottom surface of the second sealing lip.

In an optional embodiment of the present disclosure, the sealing structure has at least a first assembled state and a second assembled state,
in the first assembled state, at least a portion of the bottom surface of the first sealing lip is in sealed connection with at least a portion of the top surface of the second sealing lip; and
in the second assembled state, at least a portion of the top surface of the first sealing lip is in sealed connection with at least a portion of the bottom surface of the second sealing lip.

In an optional embodiment of the present disclosure, a deformation portion is disposed below the second sealing lip, and when at least a portion of the bottom surface of the first sealing lip is in sealed connection with at least a portion of the top surface of the second sealing lip, the deformation portion allows the second sealing lip to deform under a downward pressure exerted by the first sealing lip.

In an optional embodiment of the present disclosure, a protrusion is disposed on the top surface of the second sealing lip to form a first sealing groove between the top surface of the second sealing lip and the protrusion, and when at least a portion of the bottom surface of the first sealing lip is in sealed connection with at least a portion of the top surface of the second sealing lip, an end portion of the first sealing lip is embedded into the first sealing groove.

In an optional embodiment of the present disclosure, the top surface of the first sealing lip is smoothly jointed to the top surface of the protrusion.

In an optional embodiment of the present disclosure, a third sealing lip is disposed on the top surface of the first sealing lip to form a second sealing groove between the top surface of the first sealing lip and the third sealing lip, and when at least a portion of the top surface of the first sealing lip is in sealed connection with at least a portion of the bottom surface of the second sealing lip, an end portion of the second sealing lip is embedded into the second sealing groove.

In an optional embodiment of the present disclosure, in cross-section, the first sealing lip has an arc shape, with one end connected to a body of the first sealing member and the other end extending toward the second component; and
a cross-section of the second sealing lip is of an arc shape with one end connected to a body of the second sealing member and the other end extending toward the first component.

In an optional embodiment of the present disclosure, the second sealing member includes a mounting portion, through which the second sealing member is in sealed connection with an edge of the second component.

In an optional embodiment of the present disclosure, the assembly portion is a groove matched with the edge of the second component, the edge of the second component is located in the groove, and an end surface or a sidewall surface of the second component is in sealed connection with an inner wall of the groove.

In an optional embodiment of the present disclosure, the first seal is in sealed connection with an end surface or a sidewall surface of the first component.

In an optional embodiment of the present disclosure, the first sealing member and the first component are integrally formed.

In an optional embodiment of the present disclosure, the second sealing member and the second component are integrally formed.

The present disclosure provides a vehicle window, including: a first component; a second component; the aforementioned sealing structure, which is sealingly disposed at a junction between the first component and the second component.

In an optional embodiment of the present disclosure, the sealing structure is disposed along an edge of the vehicle window.

In an optional embodiment of the present disclosure, the first component and the second component are a windshield and a sunroof glass, respectively, or the first component and the second component are the sunroof glass and the windshield, respectively, or the first component and the second component are a rear window and the sunroof glass, respectively, or the first component and the second component are the sunroof glass and the rear window, respectively.

The present disclosure provides a vehicle, including the aforementioned vehicle window, which is disposed on the vehicle.

As can be seen from the above description, the characteristics and the advantages of the sealing structure, the window and the vehicle of the present disclosure are as follows: the first sealing member is in sealed connection with the first component and the second sealing member is in sealed connection with the second component. The first sealing member is provided with a first sealing lip, and the second sealing member is provided with a second sealing lip. When both the first component and the second component are located at preset assembly positions, at least a portion of the first sealing lip is in sealed connection with at least a portion of the second sealing lip, thereby enabling the sealing at the junction between the first component and the second component. The first component or the second component may be remounted in a conventional assembly way after being disassembled when required. Compared with the existing sealing structure, the arrangement of the first sealing lip and the second sealing lip can reduce the interference between the first sealing member and the second sealing member during mounting, thus making disassembly and assembly easier. After the first component or the second component is remounted, the first sealing lip and the second sealing lip can still resume a sealed connection state, and an appropriate pressing force can be maintained therebetween, thus ensuring the sealing effect and achieving sufficient and effective sealing of the junction between the first component and the second component.

### Brief Description of the Drawings

The following drawings are only intended to provide a schematic illustration and explanation of the present disclosure, rather than limiting the scope thereof. In which:
FIG. 1 illustrates a schematic diagram of a sealing structure between a windshield and a sunroof glass before replacement in the prior art.
FIG. 2 illustrates a schematic diagram of a sealing structure between a windshield and a sunroof glass after replacement in the prior art.
FIG. 3 illustrates a first cross-sectional view of a first seal and a second seal in an assembled state in a sealing structure of the present disclosure.
FIG. 4 illustrates a first cross-sectional view of a first seal in a sealing structure of the present disclosure.
FIG. 5 illustrates a first cross-sectional view of a second seal in a sealing structure of the present disclosure.
FIG. 6 illustrates a second cross-sectional view of a first seal and a second seal in an assembled state in a sealing structure of the present disclosure.
FIG. 7 illustrates a third cross-sectional view of a first seal and a second seal in an assembled state in a sealing structure of the present disclosure.
FIG. 8 illustrates a fourth cross-sectional view of a first seal and a second seal in an assembled state in a sealing structure of the present disclosure.
FIG. 9 illustrates a second cross-sectional view of a first seal in a sealing structure of the present disclosure.
FIG. 10 illustrates a second cross-sectional view of a second seal in a sealing structure of the present disclosure.

### Detailed Description of the Embodiments

In order to have a clearer understanding of the technical features, objectives, and effects of the present disclosure, specific embodiments of the present disclosure are now described with reference to the drawings.

Directional terms such as upper, lower, top, and bottom used in the present disclosure are all based on the directions such as upper, lower, top, and bottom as illustrated in FIG. 3, which are hereby explained collectively.

As illustrated in FIGS. 3 to 10, the present disclosure provides a sealing structure for sealing at a junction between a first component 1 and a second component 2. The sealing structure includes a first sealing member 3 and a second sealing member 4, in which the first sealing member 3 is configured to sealingly connect to the first component 1, and is provided with a first sealing lip 301; the second sealing member 4 is configured to in sealed connection with the second component 2, and is provided with a second sealing lip 401; and at least a portion of the first sealing lip 301 is in sealed connection with at least a portion of the second sealing lip 401.

In the present disclosure, the first sealing member 3 is in sealed connection with the first component 1, and the second sealing member 4 is in sealed connection with the second component 2. The first sealing member 3 is provided with a first sealing lip 301 and the second sealing member 4 is provided with a second sealing lip 401. When both the first component 1 and the second component 2 are located at their preset assembly positions, at least a portion of the first sealing lip 301 is in sealed connection with at least a portion of the second sealing lip 401, thereby achieving a seal at the junction between the first component 1 and the second component 2. The first component 1 or the second component 2 may be remounted in a conventional assembly way after being disassembled when required. Compared with the existing sealing structure, the arrangement of the first sealing lip 301 and the second sealing lip 401 can reduce the interference between the first sealing member 3 and the second sealing member 4 during mounting, thus making disassembly and assembly easier. After the first component 1 or the second component 2 is remounted, the first sealing lip 301 and the second sealing lip 401 can still resume a sealed connection state, and an appropriate pressing force can be maintained therebetween, thus ensuring the sealing effect and achieving sufficient and effective seal at the junction between the first component 1 and the second component 2. Of course, it is also possible to exchange the first component 1 and the second component 2, i.e., the first sealing member 3 is in sealed connection with the second component 2, and the second sealing member 4 is in sealed connection with the first component 1.

In addition, the cooperative sealing arrangement of the first sealing lip 301 and the second sealing lip 401 can reduce an interference force on the first sealing lip 301 when the second component 2 is replaced, thereby preventing the first component 1 and the first sealing member 3 connected thereto from falling off.

Further, both the first sealing member 3 and the second sealing member 4 are made of an elastic sealing material. In which, the first sealing member 3 and the second sealing member 4 may be made of, but not limited to, rubber.

Further, when both the first component 1 and the second component 2 are in an assembled state, a cross-section of the first sealing lip 301 is of an arc shape with one end connected to a body of the first sealing member 3 and the other end extending toward the second component 2; and a cross-section of the second sealing lip 401 is of an arc shape with one end connected to a body of the second sealing member 4 and the other end extending toward the first component 1.

In an optional embodiment of the present disclosure, the sealing structure has at least a first assembled state and a second assembled state. When the sealing structure is in the first assembled state, at least a portion of a bottom surface of the first sealing lip 301 is in sealed connection with at least a portion of a top surface of the second sealing lip 401; and when the sealing structure is in the second assembled state, at least a portion of a top surface of the first sealing lip 301 is in sealed connection with at least a portion of a bottom surface of the second sealing lip 401.

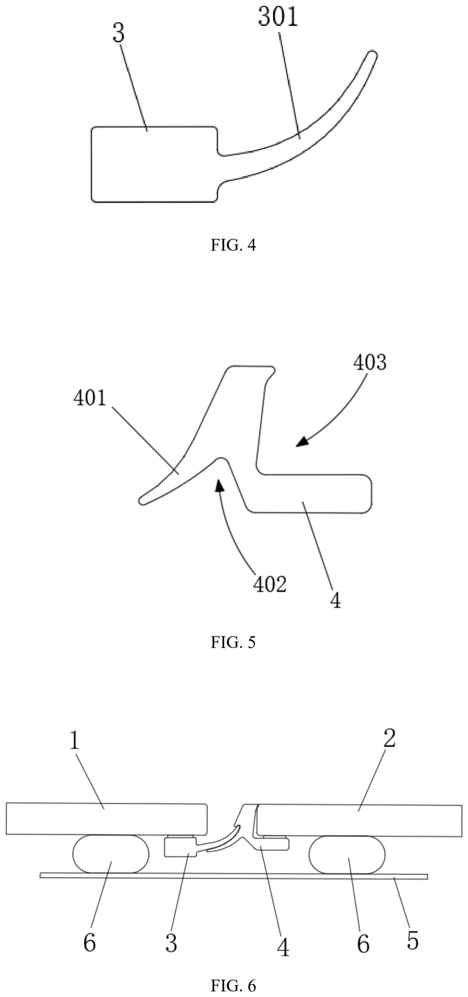

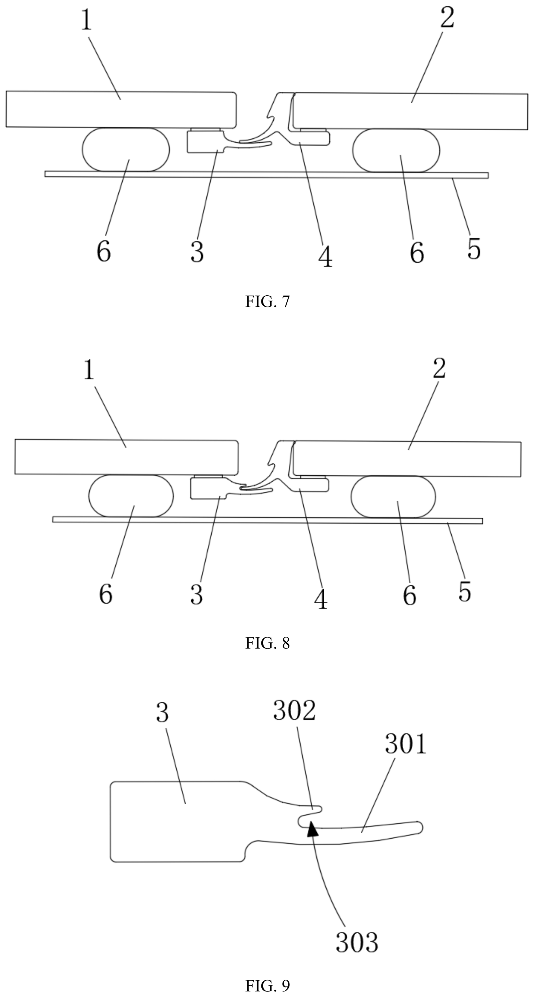

Specifically, as illustrated in FIGS. 3 and 6, the first assembled state may be as follows: when both the first component 1 and the second component 2 are located at their initial assembly positions (as illustrated in FIGS. 3 and 6, the second component 2 is assembled first at a preset position, and then the first component 1 is assembled at a preset position), at least a portion of the bottom surface of the first sealing lip 301 of the first sealing member 3 is in sealed connection with at least a portion of the top surface of the second sealing lip 401 of the second sealing member 4, thereby enabling the sealing at the junction between the first component 1 and the second component 2. The second assembled state may be as follows: when both the first component 1 and the second component 2 are located at their reassembly positions (as illustrated in FIGS. 7 and 8, the assembly position of the first component 1 remains unchanged, and after the second component 2 is disassembled, a new second component 2 is assembled at the preset position), at least a portion of the top surface of the first sealing lip 301 of the first sealing member 3 is in sealed connection with at least a portion of the bottom surface of the second sealing lip 401 of the second sealing member 4. The first sealing lip 301 and the second sealing lip 401 can still resume the sealed connection state, and an appropriate pressing force can be maintained between the first sealing lip 301 and the second sealing lip 401, thereby ensuring the sealing effect.

In an optional embodiment of the present disclosure, as illustrated in FIGS. 3, 5 to 8, and 10, a deformation portion 402 is disposed below the second sealing lip 401, and when at least a portion of the bottom surface of the first sealing lip 301 is in sealed connection with at least a portion of the top surface of the second sealing lip 401, the deformation portion 402 allows the second sealing lip 401 to deform under a downward pressure exerted by the first sealing lip 301. The deformation portion 402 enables the second sealing lip 401 to have a certain deformation capability, so that an appropriate pressing force is maintained between the first sealing lip 301 and the second sealing lip 401. Thus, after the second component 2 is disassembled and then reassembled, the sealing effect between the first sealing lip 301 and the second sealing lip 401 can still be ensured. In which, the deformation portion 402 may be a groove disposed below the second sealing lip 401 and located between the second sealing lip 401 and the body of the second component 2.

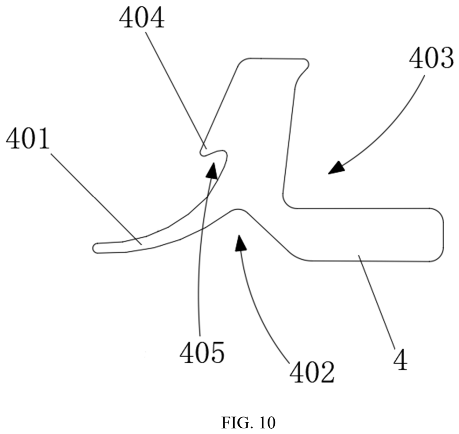

In an optional embodiment of the present disclosure, as illustrated in FIGS. 6 and 10, a protrusion 404 is disposed on the top surface of the second sealing lip 401 to form a first sealing groove 405 between the top surface of the second sealing lip 401 and the protrusion 404, and when at least a portion of the bottom surface of the first sealing lip 301 is in sealed connection with at least a portion of the top surface of the second sealing lip 401, an end portion of the first sealing lip 301 is sealingly embedded into the first sealing groove 405. By disposing the first sealing groove 405, in an initial assembled state of the first component 1 and the second component 2 (i.e., the second component 2 is firstly assembled, and then the first component 1 is assembled), the stable overlapping between the first sealing lip 301 and the second sealing lip 401 can be ensured, thereby guaranteeing a good sealing effect.

Further, as illustrated in FIG. 3, when the first sealing lip 301 and the second sealing lip 401 are in a sealed connection state, the first sealing lip 301 may protrude beyond the top surface of the second sealing lip 401. Of course, as illustrated in FIG. 6, due to the arrangement of the first sealing groove 405, after the end portion of the first sealing lip 301 is sealingly embedded into the first sealing groove 405, the top surface of the first sealing lip 301 can be smoothly jointed to the top surface of the protrusion 404, thereby enabling a smooth transition at a junction between the first sealing lip 301 and the second sealing lip 401, thereby improving the overall aesthetics of the sealing structure.

In an optional embodiment of the present disclosure, as illustrated in FIGS. 8 and 9, a third sealing lip 302 is disposing on the top surface of the first sealing lip 301 to form a second sealing groove 303 between the top surface of the first sealing lip 301 and the third sealing lip 302, and when at least a portion of the top surface of the first sealing lip 301 is in sealed connection with at least a portion of the bottom surface of the second sealing lip 401, an end portion of the second sealing lip 401 is embedded into the second sealing groove 303. By disposing the second sealing groove 303, in a state where the second component 2 is disassembled and then reassembled, the stable overlapping between the first sealing lip 301 and the second sealing lip 401 can be ensured, and after the second component 2 is replaced, a good sealing effect can still be guaranteed.

In an optional embodiment of the present disclosure, as illustrated in FIGS. 3, 5 to 8, and 10, the second sealing member 4 is provided with a mounting portion 403 through which the second sealing member 4 is in sealed connection with an edge of the second component 2.

Specifically, as illustrated in FIGS. 3, 5 to 8, and 10, the assembly portion 403 may be a groove matched with the edge of the second component 2. The edge of the second component 2 may be embedded into the groove, and an end surface or a sidewall surface of the second component 2 may be in sealed connection with an inner wall of the groove. In which, the inner wall of the groove may be provided with a sealant, through which the second component 2 and the second sealing member 4 are bonded and fixed to each other.

In an optional embodiment of the present disclosure, as illustrated in FIGS. 3 and 6 to 8, the first sealing member 3 is in sealed connection with an end surface or a sidewall surface of the first component 1 (the the bottom surface of the first component 1 illustrated in FIGS. 3 and 6 to 8). In which, the first sealing member 3 and the first component 1 are bonded and fixed to each other through a sealant provided therebetween.

In another optional embodiment of the present disclosure, the first sealing member 3 and the first component 1 may be integrally injection-molded, and the second sealing member 4 and the second component 2 may be integrally injection-molded.

In the specific assembly process of the sealing structure of the present disclosure, as illustrated in FIGS. 3 and 6, the second component 2 is firstly assembled at a corresponding preset position (e.g., a vehicle body sheet metal 5), and then the first component 1 is assembled at a corresponding preset position (e.g., the vehicle body sheet metal 5), so that at least a portion of the bottom surface of the first sealing lip 301 of the first sealing member 3 is in sealed connection with at least a portion of the top surface of the second sealing lip 401 of the second sealing member 4, thereby enabling the sealing of the junction between the first component 1 and the second component 2. As illustrated in FIGS. 7 and 8, after the second component 2 is disassembled, the replaced second component 2 may be remounted at the corresponding preset position. At this time, at least a portion of the bottom surface of the second sealing lip 401 of the second sealing member 4 is in sealed connection with at least a portion of the top surface of the first sealing lip 301 of the first sealing member 3. Thus, after the second component 2 is replaced, the sealing of the junction between the first component 1 and the second component 2 can still be ensured. In addition, the replacement of the second component 2 may not affect the first component 1 and the first sealing member 3, and the first sealing lip 301 and the second sealing lip 401 can still resume the sealed connection state, thereby ensuring sufficient and effective sealing of the junction between the first component 1 and the second component 2.

The characteristics and advantages of the sealing structure of the present disclosure are as follows.

In this sealing structure, the seal at the junction between the first component 1 and the second component 2 is achieved by the cooperative engagement between the first sealing lip 301 of the first sealing member 3 and the second sealing lip 401 of the second sealing member 4. The first component 1 or the second component 2 may be remounted in a conventional assembly way after being disassembled when required. Compared with the existing sealing structure, the arrangement of the first sealing lip 301 and the second sealing lip 401 can reduce the interference between the first sealing member 3 and the second sealing member 4 during mounting, thus making disassembly and assembly easier. After the first component 1 or the second component 2 is remounted, the first sealing lip 301 and the second sealing lip 401 can still resume a sealed connection state, and an appropriate pressing force can be maintained therebetween, thus ensuring the sealing effect and achieving sufficient and effective sealing of the junction between the first component 1 and the second component 2.

The present disclosure provides a vehicle window, which includes a first component 1, a second component 2, and the aforementioned sealing structure. The sealing structure is sealingly disposed at a junction between the first component 1 and the second component 2.

Further, the sealing structure is disposed along an edge of the vehicle window.

In an optional embodiment of the present disclosure, the first component 1 and/or the second component 2 may be made of tempered glass or laminated glass.

Further, when the first component 1 is a windshield of a vehicle, the second component 2 may be a sunroof glass of the vehicle; when the first component 1 is the sunroof glass of the vehicle, the second component 2 may be the windshield of the vehicle; when the first component 1 is a rear window of the vehicle, the second component 2 may be the sunroof glass of the vehicle; and when the first component 1 is the sunroof glass of the vehicle, the second component 2 may be the rear window of the vehicle.

In an optional embodiment of the present disclosure, as illustrated in FIGS. 3 and 8, the first component 1 and the second component 2 are fixedly connected to a vehicle body sheet metal 5 through a connector 6, respectively, in which the connector 6 may be, but not limited to, a vehicle body adhesive.

The characteristics and advantages of the vehicle window of the present disclosure are as follows.

In this vehicle window, by disposing the sealing structure, the replacement of the sunroof glass may not affect the already mounted windshield and/or rear window, and it is also unnecessary to disassemble and assemble the windshield and/or rear window synchronously, which simplifies the steps of the replacement of the sunroof glass, improves the efficiency, and greatly reduces the replacement cost, thereby achieving good economy and applicability. In addition, the replacement of the sunroof glass may not affect the sealing structure, and after the replacement of the sunroof glass, it is still possible to ensure the sufficient and effective sealing of the junction between the sunroof glass and the surrounding components (e.g., the windshield and the rear window).

The present disclosure provides a vehicle, which includes the aforementioned vehicle window disposed on the vehicle.

Those described above are merely schematic specific embodiments of the present disclosure, and are not intended to limit the scope of the present disclosure. Any equivalent change or modification made by persons skilled in the art without departing from the concept and principles of the present disclosure should fall within the protection scope of the present disclosure.

## Claims

1. A sealing structure for sealing a junction between a first component and a second component, wherein the sealing structure comprises:
a first sealing member, which is configured to be in sealed connection with the first component and provided with a first sealing lip; and
a second sealing member, which is configured to be in sealed connection with the second component and provided with a second sealing lip; and wherein
at least a portion of the first sealing lip is in sealed connection with at least a portion of the second sealing lip.

2. The sealing structure according to claim 1, wherein when both the first component and the second component are assembled at preset positions, at least a portion of a bottom surface of the first sealing lip is in sealed connection with at least a portion of a top surface of the second sealing lip, or at least a portion of a top surface of the first sealing lip is in sealed connection with at least a portion of a bottom surface of the second sealing lip.

3. The sealing structure according to claim 2, wherein the sealing structure has at least a first assembled state and a second assembled state,
in the first assembled state, at least a portion of the bottom surface of the first sealing lip is in sealed connection with at least a portion of the top surface of the second sealing lip; and
in the second assembled state, at least a portion of the top surface of the first sealing lip is in sealed connection with at least a portion of the bottom surface of the second sealing lip.

4. The sealing structure according to claim 2, wherein a deformation portion is disposed below the second sealing lip, and when at least a portion of a bottom surface of the first sealing lip is in sealed connection with at least a portion of a top surface of the second sealing lip, the deformation portion allows the second sealing lip to deform under a downward pressure exerted by the first sealing lip.

5. The sealing structure according to claim 2, wherein a protrusion is disposed on a top surface of the second sealing lip to form a first sealing groove between the top surface of the second sealing lip and the protrusion, and when at least a portion of a bottom surface of the first sealing lip is in sealed connection with at least a portion of the top surface of the second sealing lip, an end portion of the first sealing lip is embedded into the first sealing groove.

6. The sealing structure according to claim 5, wherein the top surface of the first sealing lip is smoothly jointed to the top surface of the protrusion.

7. The sealing structure according to claim 2, wherein a third sealing lip is disposed on the top surface of the first sealing lip to form a second sealing groove between the top surface of the first sealing lip and the third sealing lip, and when at least a portion of the top surface of the first sealing lip is in sealed connection with at least a portion of the bottom surface of the second sealing lip, an end portion of the second sealing lip is embedded into the second sealing groove.

8. The sealing structure according to any one of claims 1 to 7, wherein in cross-section, the first sealing lip has an arc shape, with one end connected to a body of the first sealing member and the other end extending toward the second component; and
a cross-section of the second sealing lip is of an arc shape with one end connected to a body of the second sealing member, and the other end extending toward the first component.

9. The sealing structure according to claim 1, wherein the second sealing member comprises a mounting portion, through which the second sealing member is in sealed connection with an edge of the second component.

10. The sealing structure according to claim 9, wherein the assembly portion is a groove matched with the edge of the second component, the edge of the second component is located in the groove, and an end surface or a sidewall surface of the second component is in sealed connection with an inner wall of the groove.

11. The sealing structure according to claim 1, wherein the first sealing member is in sealed connection with an end surface or a sidewall surface of the first component.

12. The sealing structure according to claim 1, wherein the first sealing member and the first component are integrally formed.

13. The sealing structure according to claim 1, wherein the second sealing member and the second component are integrally formed.

14. A vehicle window, comprising:
a first component;
a second component;
the sealing structure according to any one of claims 1 to 13, which is sealingly disposed at a joint position between the first component and the second component.

15. The vehicle window according to claim 14, wherein the sealing structure is disposed along an edge of the vehicle window.

16. The vehicle window according to claim 14, wherein the first component and the second component are a windshield and a sunroof glass, respectively, or the first component and the second component are the sunroof glass and the windshield, respectively, or the first component and the second component are a rear window and the sunroof glass, respectively, or the first component and the second component are the sunroof glass and the rear window, respectively.

17. A vehicle, comprising the vehicle window according to any one of claims 14 to 16, which is disposed on the vehicle.
